# EUROPÄISCHE PATENTSCHRIFT

(11) **EP 1 809 576 B1**
(45) Veröffentlichungstag und Bekanntmachung des Hinweises auf die Patenterteilung: **23.03.2011**
(21) Anmeldenummer: 05799690.2
(22) Anmeldetag: 27.10.2005
(51) Int. Cl.: C01B 39/48, B01J 29/70, B01J 20/18

(54) **VERFAHREN ZUR SYNTHESE VON ZEOLITH BETA MIT DIETHYLENTRIAMIN**
METHOD FOR THE SYNTHESIS OF ZEOLITE BETA WITH DIETHYLENTRIAMINE
PROCEDE DE SYNTHESE DE ZEOLITHE BETA AVEC DE LA DIETHYLENETRIAMINE

(30) Priorität: 12.11.2004 DE 102004054777
(43) Veröffentlichungstag der Anmeldung: 25.07.2007
(73) Patentinhaber: SÜD-CHEMIE AG, 80333 München (DE)
(72) Erfinder: BREUNINGER, Marcus, 83024 Rosenheim (DE)
(74) Vertreter: Stolmár, Matthias
(86) Internationale Anmeldenummer: PCT/EP2005/011517
(87) Internationale Veröffentlichungsnummer: WO 2006/050820

(56) Entgegenhaltungen:
- EP-A- 0 915 056
- US-A- 3 308 069
- US-A- 5 139 759

## Beschreibung

Die Erfindung betrifft ein Verfahren zur Herstellung von Zeolith Beta wobei die strukturdirigierenden Agenzien (Template) Diethylentriamin umfassen. Der erhaltene Zeolith Beta eignet sich unter anderem zur Herstellung von Katalysatoren für Kohlenwasserstoffumwandlungen und als Adsorptionsmittel.

Die Synthese von Zeolith Beta mit Tetraethylammoniumkationen als strukturdirigierende Agenzien ist seit langem bekannt. So beschreibt das U.S. Patent 3, 308, 069 die Synthese von Zeolith Beta in Anwesenheit von Tetraethylammoniumhydroxid. Der Zeolith kristallisiert bei Temperaturen zwischen 75 °C und 200 °C aus einer Mischung enthaltend Tetraethylammoniumhydroxid und Quellen für Na₂O, Al₂O₃ und SiO₂.

Neben Tetraethylammoniumkationen sind auch bicyclische Verbindungen, wie z.B. 1,4-Diazabicyclo- [2, 2, 2] -oktan (DABCO) als struktur-dirigierende Agenzien für die Synthese von Zeolith Beta beschrieben worden. U.S. Patent 4, 554, 145 legt die Synthese von Zeolith Beta mit Dibenzyl-1,4-diazabicyclo-[2, 2, 2] -oktanchlorid oder -hydroxyd (Dibenzyl-DABCO) offen.

EP 0 419 334 A1 beschreibt die Synthese von Zeolith Beta mit einer Mischung aus DABCO und Methylamin als strukturdirigierende Agenzien.

U.S. Patent 5,139,759 legt die Synthese von Zeolith Beta mit Diethanolamin und einem Tetraethylammoniumhalogenid, bevorzugt Tetraethylammoniumbromid, offen.

Im U.S. Patent 5,232,579 wird die Synthese von großkristallinem Zeolith Beta mit tertiären Alkanolaminen als stickstoffhaltige Chelatliganden und Tetraethylammoniumkationen, wie z.B. dem Hydroxid oder einem Halogenid, offengelegt. Als tertiäre Alkanolamine werden Triethanolamin, Triisopropylamin und 2,2-Bis(hydroxymethyl)-2,2',2"-nitrilotriethanol genannt.

Es besteht weiterhin ein großer Bedarf nach alternativen, einfachen und kostengünstigen Verfahren zur Herstellung von hochwertigem Zeolith Beta. Eine Aufgabe der vorliegenden Erfindung war daher die Bereitstellung eines solchen Verfahrens, das zudem die Nachteile des Standes der Technik vermeidet.

Diese Aufgabe wird durch das Verfahren gemäß Anspruch 1 gelöst. Bevorzugte Ausführungsformen für das erfindungsgemäße Verfahren sind in den Unteransprüchen enthalten.

Dabei ist dem Fachmann geläufig, was unter einem Zeolith Beta zu verstehen ist. Eine nähere Erläuterung ist daher hier nicht erforderlich. Beispielsweise kann auf die US 3, 308, 069 und die dortige Beschreibung von Zeolith Beta sowie auf die US 5,139,759, Spalte 1, Z. 18 bis 56 verwiesen werden. Kurz gesagt, besteht Zeolith beta aus einem dreidimensionalen Porensystem mit 12-Ring-Kanälen, die untereinander verbunden sind. Dabei verlaufen in zwei Dimensionen lineare Kanäle, durch deren gemeinsame Kreuzungsstellen schraubenförmig gewundene 12-Ring-Kanäle in der dritten Raumrichtung entstehen. Die Struktur des Zeolithen Beta ist nicht einheitlich, sondern bewegt sich zwischen zwei Endgliedern, den sogenannten Polymorphen A und B. Die Summenformel für Zeolith Beta lautet z.B.: y Na⁺[Al_{y}Si_{64-y}O₁₂₈] *n H₂O, wobei y kleiner als 7 ist (siehe auch J.B. Higgins et al. Zeolites 8 (1988), 446-452).

So wurde im Rahmen der vorliegenden Erfindung überraschend gefunden, dass sich Zeolith Beta vorteilhaft herstellen lässt, wenn die strukturdirigierenden Agenzien (Template) Diethylentriamin (1,4,7-Triazaheptan, *dien*) umfassen. Die Erkenntnis der Erfinder, dass Diethylentriamin besonders vorteilhaft zur Synthese von Zeolith Beta eingesetzt werden kann, ist umso unerwarteter, da man mit den in der Literatur beschriebenen Synthesevorschriften, die Diethylentriamin als strukturdirigierendes Agens verwenden, solche Zeolithstrukturen erhält, die erstens keine strukturelle Verwandtschaft zum Zeolith Beta besitzen und zweitens, wenn sie als Fremdphase in einer Synthese von Zeolith Beta auftraten würden, höchst unerwünscht sind. Dies sind unter anderem ZSM-5 (MFI), ZSM-11 (MEL) und ZSM-48.

So beschreiben P. Behrens et al. (Studies in surface Science and Catalysis, 135 (2001) 447-455) den struktur-dirigierenden Effekt von Diethylentriamin auf die Synthese von Porosilen. Im System x (H₂NC₂H₄) ₂NH : 0,8 HF : SiO₂ : (10 - x) H₂O wurde der Stoffmengenanteil x des Diethylentriamins im Bereich von 0,1 bis 10 variiert. Für x=10 wurde nach 120 Tagen das Clathrasil Nonasil erhalten. Im Bereich zwischen x=7.5 und x=9 entsteht innerhalb von 13 Tagen eine Mischung aus Nonasil und Silikalit-1 (MFI) . zwischen x=7 und x=5 wird nur MFI gebildet, während bei einer weiteren Erniedrigung von x bildet sich ZSM-48, zuerst mit MFI als Fremdphase, bei x=2 als reine Phase. Bei Werten x<1 wird keine kristalline Phase erhalten. Dass Diethylentriamin, neben anderen Stickstoffverbindungen, als struktur-dirigierendes Agens für die Synthese von ZSM-48 verwendet werden kann, wurde bereits von R. Szostak im "Handbook of Molecular Sieves", Van Noostrand Rheinhold, New York, 1992, S. 551-553, zusammengefasst. Die Synthese von ZSM-5 und ZSM-11 mit aliphatischen Aminen als Template wird in WO 2001/004051 beschrieben. Als mögliche Template werden, neben Diethylentriamin, noch Ethylamin, Ethylendiamin, Trimethylentetramin und tris-(2-Aminoethyl)-amin genannt.

Verfahren zur Herstellung von Zeolith Beta sind dem Fachmann als solche bekannt. Allgemein wird dabei eine Reaktionsmischung bestehend aus mindestens einem strukturdirigierenden Agens (Templat), mindestens einer Silicium- bzw. Silicaquelle und mindestens einer Aluminium- bzw. Aluminaquelle eingesetzt. Im Rahmen der vorliegenden Erfindung können dabei allgemein alle dem Fachmann geläufigen Silicium- bzw. Silicaquellen und Aluminium- bzw. Aluminaquellen verwendet werden. Allgemein wird zur Herstellung des Zeoliths eine Reaktionsmischung, enthaltend Diethylentriamin, gegebenenfalls andere Template wie Tetraethylammoniumkationen, eine Kieselsäurequelle und eine Aluminatquelle, hergestellt und dieses Gemisch bei erhöhten Temperaturen gehalten, bis sich Kristalle von Zeolith Beta gebildet haben.

Beispiele geeigneter Silicium- bzw. Silicaquellen sind, ohne Beschränkung, Silicate, Kieselsol, Kieselsäureester, gefällte Kieselsäure oder pyrogene Kieselsäure. Gefällte Kieselsäure wird erfindungsgemäß bevorzugt.

Beispiele geeigneter Aluminium- bzw. Aluminaquellen sind, ohne Beschrankung, Aluminate, Aluminiumoxide ober -hydroxide oder Aluminoxid-Trihydrat. Aluminate wie Natriumaluminat werden erfindungsgemäß bevorzugt.

Erfindungsgemäß ist nun wesentlich, dass die zur Synthese von Zeolith Beta eingesetzten strukturdirigierenden Agenzien (Template) zumindest Diethylentriamin umfassen. Neben Diethylentriamin können die aus dem Stand der Technik bekannten und dem Fachmann geläufigen Template verwendet werden.

Nach einer besonders bevorzugten erfindungsgemäßen Ausführungsform wird das Diethylentriamin (R') als Salz der allgemeinen Summenformel R'X, R'X₂ und/oder R'X₃ eingesetzt, wobei X vorzugsweise ein Halogenid, insbesondere Bromid, oder ein Hydroxid darstellt.

Nach einer besonders bevorzugten Ausführungsform wird bei dem erfindungsgemäßen Verfahren eine Templatmischung eingesetzt, die neben Diethylentriamin auch Tetraethylammoniumkationen bzw. diese enthaltende Verbindungen enthält oder aus diesen beiden Komponenten im wesentlichen besteht. Besonders bevorzugte molare Verhältnisse von Tetraethylammoniumsalz (R) und Diethylentriamin (R') liegen wie folgt: R/(R+ R') = 0,2 bis 0,85. Besonders bevorzugt besteht die eingesetzte Templatmischung zu mehr als 90 Gew.-%, weiter bevorzugt mehr als 95 Gew.-%, weiter bevorzugt mindestens 99 Gew.-% aus mindestens einer Tetraehtylammoniumkationen enthaltenden Verbindung und Diethylentriamin. Hierbei werden besonders vorteilhafte Synthesen ermöglicht.

Nichtbeschränkende Beispiele für geeignete Tetraethylammoniumkationen enthaltende Verbindungen sind: Tetraethylammoniumhydroxid, Tetraethylammoniumbromid, Tetraethylammoniumchlorid und Tetraethylammoniumfluorid und deren Gemische. Üblicherweise werden die Tetraethylammoniumkationen als Hydroxid oder Bromid eingesetzt, wobei der Preis für Tetraethylammoniumhydroxid ein Mehrfaches des Kreises für Tetraethylammoniumbromid beträgt. Dies macht synthesen auf Basis von Tetraethylammoniumbromid für die Produktion von zeolith Beta in kommerziellem Maßstab interessant. Ein Nachteil einer auf dem Bromid basierenden Syntheseroute ist die geringere Alkalinität der Reaktionsmischung durch den Einsatz des sauer reagierenden Salzes Tetraethylammoniumbromid. Ohne Zusatz einer Base wird der für das Entstehen des Zeoliths Beta.nötige pH-Wert von pH >10 nicht erreicht. Eine Erhöhung der Alkalinität durch vermehrten Zusatz von z.B. Natriumhydroxid führt, durch die gleichzeitige Erhöhung der Na⁺-Konzentration, zu einer Bildung von unerwünschten Fremdphasen wie z.B. Mordenit (MOR) und/oder ZSM-5 (MFI).

Im Rahmen der vorliegenden Erfindung wurde nun Weiterhin gefunden, dass das Diethylentriamin in der Reaktionsmischung auch für die nötige Alkalinität sorgen bzw. dazu beitragen kann, d.h. weniger oder gar keine Lauge (Alkali) zugegeben werden muss. Weiterhin ist ein besonderer Vorteil der vorliegenden Erfindung, dass weniger (teuere) Tetraethylammoniumkationen benötigt werden als bei den Vorschriften nach dem Stand der Technik, so dass erhebliche Kosten gespart werden können. Wie vorstehend ausgeführt, ist dies umso überraschender, da Diethylentriamin gemäß Stand der Technik die Bildung anderer Zeolithstrukturen als Zeolith Beta begünstigt und, wie oben beschrieben, als strukturdirigierendes Agens für die Synthese der Zeolithe ZSM-5, ZSM-11 und ZSM-48 sowie für Nonasil Verwendung findet. Dies sind alles Zeolithe, die strukturell nicht mit Beta verwandt sind.

Wie vorstehend erwähnt, kann im Rahmen des erfindungsgemäßen Verfahrens allgemein jede dem Fachmann geläufige Silicium- bzw. Aluminiumquelle eingesetzt werden. Das Verhältnis von Silicium zu Aluminium im Reaktionsgemisch, berechnet als SiO₂/Al₂O₃, liegt allgemein zwischen etwa 10 und 400, insbesondere zwischen 20 und 50. In einzelnen Fällen können jedoch auch niedrigere oder höhere SiO₂/Al₂O₃-Verhältnisse günstig sein.

Nach einer bevorzugten Erfindung ist im Reaktionsgemisch auch mindestens eine Verbindung mit einem Alkalimetallion vorhanden. In einigen Fällen kann es jedoch auch vorteilhaft sein, die Anwesenheit von Alkalimetallionen gänzlich zu vermeiden.

Nach einer erfindungsgemäßen Ausführungsform liegt das Verhältnis M₂O/SiO₂, wobei M ein Alkalimetall darstellt, zwischen etwa 0,001 und 0,1, insbesondere zwischen 0,01 und 0,08. Weiterhin wird erfindungsgemäß bevorzugt, dass M Natrium darstellt.

Nach einer bevorzugten erfindungsgemäßen Ausführungsform liegt das Verhältnis R₂O/SiO₂, wobei R ein Tetraethylammoniumsalz bedeutet, zwischen etwa 0, 04 und 0, 5, insbesondere zwischen 0,06 und 0,4.

Weiterhin wird bevorzugt, dass das Verhältnis R'/SiO₂, wobei R' Diethylentriamin bedeutet, zwischen etwa 0,05 bis 1, und vorzugweise zwischen etwa 0,1 bis 0, 5, liegt. Weiterhin wird bevorzugt, dass bei dem im erfindungsgemäßen Verfahren eingesetzten Reaktionsgemisch das Verhältnis H₂O/SiO₂ zwischen etwa 6 bis 300, insbesondere zwischen etwa 10 und 50, liegt.

Nach einer bevorzugten Ausführungsform wird ein Reaktionsgemisch mit einer Zusammensetzung, ausgedrückt als Molverhältnisse, in den Bereichen:

| | |
|---|---|
| SiO₂/Al₂O₃ | 10 bis 400 |
| M₂O/SiO₂ | 0,001 bis 0,1 |
| R₂O/SiO₂ | 0,04 bis 0,5 |
| R'/SiO₂ | 0, 05 bis 1 |
| H₂O/SiO₂ | 8 bis 300 |

verwender, worin R, R' und M die vorstehenden Bedeutungen haben. Besonders bevorzugt weist das Reaktionsgemisch die folgende Zusammensetzung, ausgedruckt als Molverhältnisse, auf:

| | |
|---|---|
| SiO₂/Al₂O₃ | 20 bis 50 |
| M₂O/SiO₂ | 0, 01 bis 0, 08 |
| R₂O/SiO₂ | 0,06 bis 0,4 |
| R'/SiO₂ | 0,1 bis 0, 5 |
| H₂O/SiO₂ | 20 bis 50 |

worin R, R' und M wie vorstehend definiert sind.

Nach einer weiteren bevorzugten erfindungsgemäßen Ausführungsform enthält die verwendete Templatmischung neben mindestens Diethylentriamin und Tetraethylammoniumkationen noch Diethylenglycol (R") als weiteres Co-Templat, oder besteht im Wesentlichen oder vollständig aus den drei vorstehenden Verbindungen. Bevorzugt wird dabei, dass das Verhältnis R"/SiO₂ zwischen etwa 0, 05 und 1, und vorzugsweise zwischen etwa 0,1 und 0,5, liegt. Weiterhin wird bevorzugt, dass dabei das molare Verhältnis R/(R+ R'+ R") bei 0,2 bis 0, 8 liegt, und vorzugweise R'/R" zwischen 0,1 und 2, insbesondere zwischen 0,1 und 1 liegt. Grundsätzlich können neben oder anstelle von Diethylentriamin auch Diethylentriamin-Homologe, insbesondere Verbindungen der allgemeinen formel H₂N- (CH₂-CH₂-NH)ₓCH₂-CH₂-NH₂, wobei x größer 1 ist, als (Co)-Template verwendet werden, jedoch werden die besten Ergebnisse mit Diethylentriamin erhaltene.

Das erfindungsgemäße Reaktionsgemisch, enthaltend zumindest die Komponenten wie vorstehend ausgerührt, wird dann auf dem Fachmann geläufige Weise zur Bildung von Zeolith Beta-Kristallen umgesetzt.

Die Umsetzung des Reaktionsgemisches kann dabei mit oder ohne Rühren, vorzugsweise unter ständigem Rühren, durchgeführt werden. In vielen Bällen ist es günstig, wie Umsetzung in einem Polypropylen-, Teflon-beschichteten oder Edelstahl-Autoklaven durchzuführen. Vorzugsweise wird die Umsetzung bei erhöhter Temperatur, d.h. über Raumtemperatur, erfolgen, um die Kristallisation von Zeolith Beta zu begünstigen. Bevorzugte Temperaturen liegen zwischen etwa 70°C und 200°C, insbesondere zwischen etwa 100°C und 180°C.

Die zur Synthese von Zeolithkristallen erforderliche Zeit kann innerhalb weiter Grenzen schwanken und hängt selbstverständlich unter anderem von den anderen gewählten Reaktionsbedingungen, insbesondere der Reaktionstemperatur sowie der Zusammensetzung des Reaktionsgemisches, ab. In vielen Fällen wird die Reaktionszeit zwischen mehreren Stunden und mehreren Tagen liegen, beispielsweise zwischen etwa 16 Stunden und 90 Tagen.

Die Umsetzung kann bei Normaldruck oder, vorzugsweise, bei erhöhten Druck, z.B. in dem vorstehend erwähnten Autoklaven, durchgeführt werden.

Nach einer bevorzugten erfindungsgemäßen Ausführungsform können dem Reaktionsgemisch auch Keimkristalle von Zeolith Beta zugesetzt werden, um die Bildung weiterer Kristalle von Zeolith Beta bei der Umsetzung des Reaktionsgemisches wie vorstehend beschrieben zu begünstigen bzw. zu beschleunigen. Die Verwendung von Keim- bzw. Impfkristallen (z.B. aus früheren Synthesen) ist dem Fachmann als solcher geläufige.

Nach der Bildung der Zeolith Beta-Kristalle können diese auf dem Fachmann geläufige weise, z.B. durch Filtration oder Zentrifugation, abgetrennt werden.

Die so erhaltenen Zeolithkristalle können je nach der gewünschen Form und weiteren Verwerdung auf herkömmliche Weise getrocknet oder calciniert werden. Durch eine Calcinierung wird der Zeolith in die Wasserstofform überführt und das Templat (gemisch) entfernt. Die Calcinierung kann beispielsweise in Luft oder einer Inertatmosphäre bei Temperaturen im Bereich von etwa 200°C bis 900°C oder darüber durchgeführt werden.

Nach einer bevorzugten erfindungsgemäßen Ausführungsform kann M teilweise oder vollständig durch Wasserstoff und/oder Metalle der Gruppen IIA, IIIA, IVA, IB, IIB, IIIB, IVB, VIB, und/oder VIII des Periodensystems ausgetauscht sein, insbesondere durch Cu, Ag, Co, Fe, Ni oder Patinmetalle, insbesondere bevorzugt Pt, Pd, Rh oder Ru. Auch können die ursprünglichen Kationen gegen Ammoniumionen ausgetauscht werden. Katalytisch aktiv Formen des Zeolith Beta können beispielsweise Wasserstoff, Seltenerden-Metalle, Aluminium-Metalle der Gruppen II und VII des Periodensystems und/oder Magnesium enthalten. Verfahren zum Austausch der ursprünglichen Kationen sind dem Fachmann geläufig und müssen daher hier nicht näher erläutert werden. Beispielsweise kann der Austausch mit Hilfe von Ionenaustauschverfahren, Imprägnierung oder physikalichen Mischverfahren erfolgen.

Nach einem weiteren Aspekt betrifft die vorliegende Erfindung die Verwendung von Diethylentriamin als Templat bzw. Co-templat (d.h. zusammen mit anderen Templaten) in einem Verfahren zur Herstellung von Zeolith Beta. Besonders bevorzugt ist hierbei, wie vorstehend ausgeführt, eine Kombination von Diethylentriamin und Tetraethylammoniumkationen, und gegebenenfalls Diethylenglycol als Templat (e).

Nach einem anderen Aspekt betrifft die vorliegende Erfindung auch den nach dem vorstehend beschriebenen Verfahren erhältlichen Zeolith Beta. So wurde überraschenderweise gefunden, dass dieser besonders vorteilhafte Eigenschaften ausweist.

So weist der erfindungsgemäße Zeolith Beta eine besondere Morphologie auf, bei der die kleinen Primärkristallite überwiegend zu größeren Agglomeraten zusammengeschlossen sind. Die charakteristische Beschaffenheit des erfindungsgemäßen Zeolith Beta ermöglicht zunächst eine bessere Filtrierbarkeit im Vergleich zu den gemäß Verfahren des Standes der Technik hergestellten Beta-Zeolithen. Die bessere Filtrierbarkeit ist eine wichtige Eigenschaft, des sythetisierten Zeolithen, die zunächst eine raschere und kostengünstigere Synthese mit hohen Ausbeuten und einfacher Abtrennung aus der Mutterlauge (z.B. durch Filtration) ermöglicht. Dieser Vorteil bleibt auch bei den weiteren Verarbeitungsschritten bestehen, bei denen eine Fest-Flüssig-Trennung erforderlich ist, wie z.B. bei einem wässrigen Iönenaustausch oder einer Dealuminierung mit verdünnter Mineralsäure oder einer verdünnten organischen Säure. Nach einer bevorzugten erfindungsgemäßen Ausführungform weisen die Primärkristallite einen Durchmesser von weniger als 0,5 µm, bevorzugt weniger als 0,1 µm, insbesondere von weniger als 0,05 µm auf. Die Primärkristallite sind vorzugsweise zu mehr als 50%, bevorzugt mehr als 75%, insbesondere mehr als 90% zu Agglomeraten mit einem Durchmesser von größer 0,5 µm, bevorzugt größer als 1 µm, insbesondere größer 3 µm verwachsen. Die Primärkristallitgröße wurde anhand der Linienbreite des Reflexe bei ca. 22,4^{•} 2Theta bestimmt, wobei die frisch synthetisierten, nicht calcinierten oder ionengetauschten Zeolithproben nach der Filtration aus der Mutterlauge, Nachwaschen mit vollentsalztem Wasser bis zu einer Leitfähigkeit von kleiner 100 µs/cm im Filtrat und Trocknung in Luft bei 120 °C zur Röntgen-Pulverdiffraktometrie eingesetzt wurden. Die Röntgen-Pulverdiffraktometrie wunde nach dem Standardverfahren wie beispielsweise in der US 4,554,145, Beispiel 1 angegeben, durchgeführt. Bei den angegebenen Werten für die Agglomerate handelt es sich um die mittleren Abmessungen (arithmetisches Mittel aus der größten und der kleinsten Abmessung, gemittelt über eine Vielzahl von Agglomeraten). Diese Werte werden mit einem LEO Field Emission Scanning ELectron Microscope (LEO Electron Microscopy Inc., USA) anhand von Pulverproben des frisch synthetisierten, nicht calcinierten oder ionengetauschten Zeolith Beta nach der Filtration aus der Mutterlauge, Nachwaschen mit vollentsalztem Wasser bis zu einer Leitfähigkeit von kleiner 100 µs/cm im Filtrat und Trocknung in Luft bei 120°C bestimmt, die zuvor in Aceton redispergiert, 30 Sekunden Ultraschallbehandelt und anschließend auf einen Träger aufgebracht worden waren (Probe Current Range: 4 pA bis 10 nA). Die Messung erfolgt bei 80.000-facher Vergrößerung. Die Werte konnten bei 253.000-facher Vergrößerung bestätigt werden.

Der erfindungsgemäß erzeugte Zeolith Beta kann allgemein auf allen Gebieten eingesetzt werden, in denen auch Zeolith Beta nach Stand der Technik eingesetzt wird. Von besonderer Bedeutung sind hierbei die Verwendungen als Katalysator bzw. Katalysatorträger sowie als Adsorptionsmittel, wobei hier überraschend gefunden wurden, dass der erfindungsgemäß erhaltene Zeolith Beta besonders vorteilhafte Aktivitäten zeigt. Es wird angenommen, ohne dass die Erfindung auf die Dichtigkeit dieser Annahme beschränkt wäre, dass die vorteilhaften Eigenschaften des erfindungsgemäß erhaltenen Zeolith Beta im Vergleich zur Materialien des Standes der Technik auf der besonderen Morphologie der Kristalline und offenporiger Agglomerate beruht, die durch das erfindungsmäße Verfahren ermöglicht wird.

Wichtige Beispiele für eine Verwendung von Zeolith Beta in der Katalyse sind Umwandlungen von Kohlenwasserstoffen, insbesondere katalytische Alkylierungen von Aromaten, organische Umgruppierungsreaktionen, Friedel-Crafts-Reaktionen, Alkylierungen und Acetylierungen, Isomerisisungen und Hydroisomerisierungen, insbesondere von Paraffinen, allgemein Hydrier-Dehydrier-Reaktionen von Kohlenwasserstoffen, Olifin-Polymerisationen bzw. -oligomerisationen, -olefin-zu-olefin-Umwandlungen sowie Methasol-zu-Propylen-Umwandlungen.

Im Bereich der Verwendung als Adsorptionsmittel können als nichtbeschränkende Beispiele die Adsorption von Kohlenwasserstoffen aus Abgäsemissionen oder die NOₓ-Reduktion genannt werden.

Je nach gewünschter Verwendung kann der nach dem erfindungsgemäßen Verfahren erhaltene Zeolith Beta mit weiteren Komponenten vermischt bzw. weiterverarbeitet werden. Beispielsweise kann hier auf die Offenbarung in der US 4,554,145, Sp. 4, Z. 60 bis Sp. 6, Z. 28, verwiesen werden, die hiermit durch Bezugnahme ausdrücklich in die Beschreibung aufgenommen wird. Bevorzugte Weiterverarbeitungen des Zeolithen betreffen wässrigen Ionenaustausch, Festkörperionenaustausch (wie beispielsweise in der EP 0 955 080 A beschrieben), Dealuminierung durch Behandlung mit verdünnter Mineralsäure oder einer verdünnten organischen Säure sowie durch Hydrothermalbehandlung (siehe z.B. R. Szostak, Studies in Surface Science Catalysis, 137 (2001) 261-297), Herstellen von Formkörpern beliebiger Größe und Form nach herkömmlichen Verfahren wie Extrudieren, Tablettieren oder Sprühtrocken, gegebenenfalls unter Zuhilfenahme von Bindemittel, oder Beschichten von Formkörpern, insbesondere Waben, mit einer Suspension aus Zeolith und Bindemittel als sogenannter Washcoat.

Die Erfindung wird nun anhand der nachstehenden nichtbeschränkenden Beispiele weiter veranschaulicht.

### Beispiel 1:

Zeolith Beta wurde in einem Reaktionsgemisch mit der Zusammensetzung, aufgedrückt als Molverhältnisse:
0, 068 Na₂O : 0,09 TEAO₂ : 0,24 (H₂NC₂H₄)₂NH 0, 04 Al₂O₃ : SiO₂ : 0, 18 HBr : 12 H₂O
kristallisiert.

Die Reaktionsmischung wurde hergestellt durch Lösen von 908,7 g Tetraethylammoniumbromid, 641,9 g Diethylentriamin und 1754,2 g gefällter Kieselsäure (Sipernat^{®} 320, Degussa, DE) in 4576,2 g Wasser. Zu dieser Mischung wurde eine zweite Lösung bestehend aus 199,5 g Natriumaluminat und 39,8 g Natriumhydroxid in 807,6 g Wasser unter Rühren gegeben. Der Reaktionsmischung wurden Zeolith Beta-Impfkristalle zugegeben. Die Masse der Impfkristalle betrug 10 Gew.-% der eingesetzten SiO2-Menge. Die Reaktionsmischung wurde 10 min durch starkes Rühren homogenisiert und in einen Syntheseautoklaven (Volumen 10 1) überführt. Darin wurde die Mischung innerhalb von 12 h auf 150°C aufgeheizt und für weitere 129 h bei dieser Temperatur gehalten. Nach dem Abkühlen wurde das Produkt abfiltriert, mit destilliertem Wasser gewaschen und bei 120°C getrocknet. Das Produkt wurde mit Röntgen-Pulverdiffraktometrie überprüft und es wurde Zeolith Beta als einzige Phase identifiziert. Die nasschemische Analyse ergab 0,35 Ges.-% Na, 3,1 Gew.-% Al, 35,5 Gew.-% Si und 13,5 Gew.-% C.

Das Abfiltrieren des synthetisierten Zeolithen Beta aus der Mutterlauge konnte mit einem Büchner-Filter in 3 Stunden vollständig abgefiltert werden.

Die erhaltenen Primärkristallite hatten einen Durchmesser von weniger als 17 nm und waren zu mehr als 90% zu Agglomeraten verwachsen. Die durchschnittliche Größe der Agglomerate, d.h. der auf die Teilchenzahl bezogene D50-Wert, lag bei 2,4 µm. Der D10-Wert der Agglomerate, d.h. derjenige Wert, bei dem 10% der Agglomerate kleiner waren, lag bei 1,4 µm.

Demgegenüber wurden für einen entsprechend nur mit Tetraethylammoniumbromid alls Templat (bei gleiche Templat-Gesamtmolarität im Reaktionsgemisch) hergestellten Zeolith Beta (Vergleich) über 48 Stunden zur Filtration aus der Mutterlauge benötigt. Die Zeolithsuspension (Vergleich) war feinteilig, die Primärkristallite waren größer als 0,5 µm und zu weniger als 10% zu Agglomeraten verwachsen.

### Beispiel 2:

Zeolith Beta wurde in einem Reaktionsgemisch mit der Zusammensetzung, ausgedrückt als Molverhältnisse:
0,04 Na₂O: 0,05 TEAO₂: 0,12 (H₂NC₂H₄)₂NH: 0,022 Al₂O_{3:} SiO₂ : 12 H₂O
kristallisiert.

Die Reaktionsmischung wurde hergestellt durch Lösen von 1229,0 g Tetraethylammoniumhydroxidlösung (35 Gew.-%ige wässrige Lösung), 361, 6 g Diethylentriamin und 1976, 4 g gefällter Kieselsäure (Sipernat® 320, Degussa, DE) in 4486, 3 g Wasser. Zu der Reaktionsmischung wurden 175,5 g templathaltige Kristallisationskeime vom Typ Zeolith Beta zugegeben. Die Masse der Impfkristalle betrug 10 Gew.-% der eingesetzten SiO₂-Menge. Zu dieser Mischung wurde eine zweite Lösung bestehend aus 124,9 g Natriumaluminat und 30,1 g Natriumhydroxid in 791,7 g Wasser unter Rühren gegeben. Die Reaktionsmischung wurde 10 min durch starkes Rühren homogenisiert und in einen Syntheseautoklaven (Volumen 10 1) überführt. Darin wurde die Mischung innerhalb von 12 h auf 150°C aufgeheizt und für weitere 95 h bei dieser Temperatur gehalten. Das Produkt wurde abfiltriert, mit destilliertem Wasser gewaschen und bei 120°c getrocknet. Das Produkt wurde mit Röntgen-Pulverdiffraktometrie überprüft und es wurde Zeolith Beta als einzige Phase identifiziert. Die nasschemische Analyse ergab 0,9 Gew.-% Na, 2,0 Gew.-% Al, 41,3 Gew.-% Si und 14,7 Gew.-% c.

Die Primärkristallite hatten einen Durchmesser von weniger als 29 nm und waren zu mehr als 90% zu Agglomeraten verwachsen. Die durchschnittliche Größe der Agglomerate, d.h. der auf die Teilchenzahl bezogene D50-Wert, lag bei 4,3 µm. Der D10-Wert der Agglomerate, d.h. derjenige Wert, bei dem 10% der Agglomerate kleiner waren, lag bei 1,5 µm.

### Beispiel 3 (Calcinierung):

Der in Beispiel 1 erhaltene Zeolith Beta wurde im Stickstoffstrom mit 1 K/min auf 380°C aufgeheizt und bei dieser Temperatur für 8 h gehalten, danach wurde die Temperatur mit 1 K/min weiter auf 480°C erhöht. Nach Erreichten der Temperatur wurde zum Stickstoffstrom Sauerstoff zugemischt und die Temperatur für weitere 16 h gehalten.

### Beispiel 4:

Zeolith Beta wurde in einem Reaktionsgemisch mit der Zusammensetzung, ausgedrückt als Molverhältnisse:
0,068 Na₂O : 0,08 TEAO₂ : 0,12 (H₂NC₂H₄)₂NH : 0,40 Al₂O₃ : SiO₂ : 0,16 HBr : 12 H₂O
kristallisiert.

Die Reaktionsmischung wurde hergestellt durch Lösen von 3662,0 g Tetraethylammoniumbromid, 1348,3 g Diethylentriamin und 7319,4 g gefällter Kieselsäure (Sipernat^{®} 320, Degussa, DE) in 18132,0 g Wasser. Zu der Reaktionsmischung wurden templathaltige Kristallisationekeime vom Typ Zeolith Beta zugegeben. Die Masse der Impfkristalle betrug 10 Gew. -% der eingesetzten SiO₂-Menge. Anschließend wurde zu dieser Mischung eine zweite Lösung bestehend aus 838,0 g Natriumaluminat und 167,3 g Natriumhydroxid in 22-66,5 g Wasser unter Rühren gegeben. Die Reaktionsmischung wurde 10 min durch starkes Rühren homogenisiert und in einen Syntheseautoklaven (Volumen 40 1) überführt. Darin wurde die Mischung innerhalb von 12 h auf 150°C aufgeheizt und für weitere 125 h bei dieser Temperatur gehalten. Nach dem Abkühlen wurde das Produkt auf einer Membranfilterpress abfiltriert, mit destilliertem Wasser nachgewaschen und bei 120°c getrocknet. Das Produkt wurde mit Röntgen-Pulverdiffraktometrie analysiert und als phasenreiner Zeolith Beta identifiziert.

Die Primärkristallite hatten einen Durchmesser von weniger als 19 nm und waren zu mehr als 90% zu Agglomeraten verwachsen. Die durchschnittliche Größe der Agglomerate, d.h. der auf die Teilchenzahl bezogene D50-Wert, lag bei 7,0 µm. Der D10-Wert der Agglomerate, d.h. derjenige Wert, bei dem 10% der Agglomerate kleiner waren, lag bei 2,0 µm.

### Beispiel 5:

Zeolith Beta wurde in einem Reaktionsgemisch mit der Zusammensetzung, ausgedrückt als Molverhältnisse:
0,08 Na₂O : 0,20 TEAO₂ : 0,107 (H₂NC₂H₄)₂NH : 0,022 Al₂O₃ : SiO₂ : 0,40 HBr : 12 H₂O kristallisiert.

Die Reaktionsmischung wurde hergestellt durch Lösen von 1998,6 g Tetraethylammoniumbromid, 261,6 g Diethylentriamin und 1608,6 g gefällter Kieselsäure (Sipernat^{®} 320, Degussa, DE) in 3189,6 g Wasser. Zu dieser Mischung wurde eine zweite Lösung bestehend aus 101,6 g Natriumaluminat und 100, 6 g Natriumhydroxid in 739, 3 g Wasser unter Rühren gegeben. Der Reaktionsmischung wurden Zeolith Beta-Impfkristalle zugegeben. Die Masse der Impfkristalle betrug 10 Gew. -% der eingesetzen SiO₂-Menge. Die Reaktionsmischung wurde 10 min durch starkes Rühren homogenisiert und in einen Syntheseautoklaven (Volumen 10 1) überführt. Darin wurde die Mischung für 1,5 h bei Raumtemperatur gerührt und danach innerhalb von 12 h auf 150°C aufgeheizt und für weitere 38,5 h bei dieser Temperatur gehalten. Nach dem Abkühlen wurde das Produkt abfiltriert, mit destilliertem Wasser gewaschen und bei 120°C getrocknet. Das Produkt wurde mit Röntgen-Pulverdiffraktometrie überprüft und es wurde Zeolith Beta als einzige Phase identifiziert. Die nasschemische Analyse ergab eine Zusammensetzung von 0,33 Gew. -% Na, 1,7 Gew. -% Al, 36,4 Gew. -% Si und 10,7 Gew.-% C.

Die Primärkristallite hatten einen Durchmesser von weniger als 33 nm und waren zu mehr als 90% zu Agglomeraten verwachsen. Die durchschnittliche Größe der Agglomerate, d.h. der auf die Teilchenzahl bezogene D50-Wert, lag bei 3,3 µm. Der D10-Wert der Agglomerate, d.h. derjenige Wert, bei dem 10% der Agglomerate kleiner waren, lag bei 1,6 µm.

### Beispiel 6:

Zeolith Beta wurde in einem Reaktionsgemisch mit der Zusammensetzung, ausgedrückt als Molverhältnisse:
0,068 Na₂O : 0,09 TEAO₂ : 0,08 (H₂NC₂H₄) ₂NH : 0,04 Al₂O₃ : SiO₂ : 0,16 HBr : 0,16 (HOC₂H₄)₂O : 12 H₂O
kristallisiert.

Die Reaktionsmischung wurde hergestellt durch Lösen von 961,2 g Tetraethylammoniumbromid, 209,7 g Diethylentriamin, 598,7 g Diethylenglykol und 1719,3 gefällter Kieselsäure (Sipernat^{®} 320, Degussa, DE) in 4485,0 g Wasser. Zu der Reaktionsmischung wurden templathaltige Kristallisationskeime vom Typ Zeolith Beta zugegeben. Die Masse der Impfkristalle betrug 10 Gew. -% der eingesetzten SiO₂-Menge. Anschließend wurde zu dieser Mischung eine zweite Lösung bestehend aus 195,5 g Natriumaluminat und 39,0 g Natriumhydroxid in 791,5 g Wasser unter Rühren gegeben. Die Reaktionsmischung wurde 10 min durch starkes Rühren homogenisiert und in einen Syntheseautoklaven (Volumen 10 1) überführt. Darin wurde die Mischung innerhalb von 12 h auf 150°C aufgeheizt und für weiteren 110 h bei dieser Temperatur gehalten. Nach dem Abkühlen wurde das Produkt auf einer Membranfilterpresse abfiltriert, mit destilliertem Wasser nachgewaschen und bei 120°C getrocknet. Das Produkt wurde mit Röntgen-Pulverdiffraktometrie analysiert und als phasenreiner Zeolith Beta identifiziert. Die nasschemische Analyse ergab 4,50 Gew.-% Na, 3,2 Gew.-% Al, 41,2 Gew.-% Si und 14,4 Gew.-% C.

Die erhaltenen Primärkristallite hatten einen Durchmesser von weniger als 22 nm und waren zu mehr als 90% zu Agglomeraten verwachsen. Die durchschnittliche Größe der Agglomerate, d.h. der auf die Teilchenzahl bezogene D50-Wert, lag bei 4,3 µm. Der D10-Wert der Agglomerate, d.h. derjenige Wert, bei dem 10% der Agglomerate kleiner waren, lag bei 1,5 µm.

### Beispiel 7 (Erzeugung der H-Form)

In einem Becherglas mit 5 l Volumen wurden 2310 g vollentsalztes Wasser vorbelegt und darin 190,0 g Ammoniumnitrat gelöst und 500 g des calcinierten Zeoliths aus Beispiel 3 suspendiert. Die Suspension wurde 2 h bei Raumtemperatur gerührt. Danach wurde der Zeolith über einem Büchner-Filter abfiltriert und mit destilliertem Wasser nachgewaschen. In einem zweiten Zyklus wurde der erhaltene Filterkuchen erneut in einer Lösung von 190,0 g Ammoniumnitrat in 2310 g vollentsalztem Wasser suspendiert und erneut für 2 h bei Raumtemperatur gerührt.

Danach wurde der Zeolith über einem Büchner-Filter abfiltriert und mit destilliertem Wasser nachgewaschen. Um eine möglichst gute Waschwirkung zu erzielen, wurde der erhaltene Filterkuchen einmal in 4 1 vollentsalztem Wasser wieder aufgeschlämmt und erneut über einem Büchner-Filter abfiltriert. Anschließend wurde der Filterkuchen für 16 h bei 120°C getrocknet und für 8 h bei 450°C calciniert. Die nasschemische Analyse des erhaltenen H-Beta Zeoliths ergab 0,01 Gew. -% Na, 3,4, Gew. -% Al, 42,9 Gew. -% Si und 0,01 Gew. -% C.

### Beispiel 8 (Erzeugung der Fe-Form)

In einem Becherglas mit 5 1 Volumen wurden 2400 g vollentsalztes Wasser vorgelegt und darin 31,6 g Eisen-(II)-sulfat gelöst und 500 g des calcinierten Zeoliths aus Beispiel 3 suspendiert. Der pH-Wert der Suspension betrug 3,14. Die Suspension wurde 2 h bei Raumtemperatur gerührt. Danach wurde der Zeolith über einem Büchner-Filter abfiltriert und mit destilliertem Wasser nachgewaschen. Um eine möglichst gute Waschwirkung zu erzielen, wurde der erhaltene Filterkuchen einmal in 4 1 vollentsalztem Wasser wieder aufgeschlämmt und erneut über einem Büchner-Filter abfiltriert. Anschließend wurde der Filterkuchen für 16 h bei 120°C getrocknet und für 8 h bei 350°C calciniert.

Die nasschemische Analyse ergab 0,08 Gew.-% Na, 3,4 Gew.-% Al, 43,1 Gew.-% Si und 1,1 Gew.-% Fe.

## Patentansprüche

1. Verfahren zur Herstellung von Zeolith Beta, wobei das eingesetzte Templat Diethylentriamin umfasst.

2. Verfahren gemäß Anspruch 1, **dadurch** gekennzeichet, dass das eingesetzte Templat Diethylentriamin und Tetraethylammoniumkationen umfasst.

3. Verfahren nach- einem der vorstehenden Ansprüche, **dadurch gekennzeichnet, dass** die eingesetzte Templatmischung im wesentlichen oder vollständig aus Diethylentriamin und mindestens einer Tetraethylammoniumkationen enthaltenden Verbindung besteht.

4. Verfahren nach einem der vorstehenden Ansprüche, **dadurch gekennzeichnet, dass** ein Reaktionsgemisch mit einer Zusammensetzung, ausgedrückt als Molverhältnisse, in den Bereichen:
| | |
|---|---|
| SiO₂/Al₂O₃ | 10 bis 400 |
| M₂O/SiO₂ | 0,001 bis 0,1 |
| R₂O/SiO₂ | 0,04 bis 0,5 |
| R'/SiO₂ | 0,05 bis 1 |
| H₂O/SiO₂ | 8 bis 300 |
verwendet wird, worin R ein Tetraethylammoniumsalz, bevorzugt ein Halogenid und/oder das Hydroxid, bedeutet, R' Diethylentriamin bedeutet und M ein Alkalimetallion bedeutet.

5. Verfahren nach einem der vorstehenden Ansprüche, **dadurch gekennzeichnet, dass** man das Reaktionsgemisch auf einer Temperatur von 100 bis 180°C hält, bis sich Kristalle von Zeolith Beta gebildet haben, und die erhaltenen Zeolithkristalle abtrennt.

6. Verfahren nach einem der vorstehenden Ansprüche, **dadurch gekennzeichnet, dass** das Reaktionsgemisch die folgende Zusammensetzung, ausgedrückt als Molverhältnisse, aufweist:
| | |
|---|---|
| SiO₂/Al₂O₃ | 20 bis 50 |
| M₂O/SiO₂ | 0,01 bis 0,08 |
| R₂O/SiO₂ | 0, 06 bis 0,4 |
| R'/SiO₂ | 0,1 bis 0,5 |
| H₂O/SiO₂ | 10 bis 50 |
worin R, R' und M wie in Anspruch 4 definiert sind.

7. Verfahren nach einem der vorstehenden Anspruche, **dadurch gekennzeichnet**, das R' als Salz der allgemeinen Summenformel R'X, R'X₂, und/oder R'X₃, bevorzugt als Halogenid, besonders bevorzugt als Bromid, eingesetzt wird.

8. Verfahren nach einem der vorstehenden Ansprüche, **dadurch gekennzeichnet, dass** R Tetraethylammoniumbromid und M Natrium ist.

9. Verfahren nach einem der vorstehenden Ansprüche, **dadurch gekennzeichnet, dass** das eingesetzte Templat neben Diethylentriamin und Tetraethylammoniumkationen Diethylenglycol umfasst, oder im wesentlichen oder vollständig aus diesen Verbindungen besteht.

10. verfahren nach einem der vorstehenden Ansprüche, **dadurch gekennzeichnet, dass** dem Reaktionsgemisch Keimkristalle von Zeolith Beta zugesetzt werden, um die Bildung weiterer Kristalle von Zeolith Beta zu fördern.

11. Verfahren nach einem der vorstehenden Ansprüche, **dadurch gekennzeichnet, dass** M vollständig oder teilweise durch Wasserstoff und/oder Metalle der Gruppen IIA, IIIA, IVA, IB, IIB, IIIB, IVB, VIB, und/oder VIII des Periodensystems ausgetauscht sind, insbesondere durch Cu, Ag, Co, Fe, Ni oder Platinmetalle, besonders bevorzugt Pt, Pd, =Rh oder Ru.

12. Verwendung von Diethylentriamin und gegebenenfalls Diethylenglycol als Templat bzw. Cotemplat in einem Verfahren zur Herstellung von Zeolith Beta.

13. verwendung gemäß Anspruch 12 zusammen mit Tetraethylammoniumkationen.

## Claims

1. Process for producing beta zeolite, wherein the template used comprises diethylenetriamine.

2. Process according to claim 1, **characterized in that** the template used comprises diethylenetriamine und tetraethylammonium cations.

3. Process according to one of the previous claims, **characterized in that** the template mixture used consists substantially or fully of diethylenetriamine and at least one compound containing tetraethylammonium cations.

4. Process according to one of the previous claims, **characterized in that** a reaction mixture is used with a composition, expressed as molar ratios, in the ranges:
| | |
|---|---|
| SiO₂/Al₂O₃ | 10 to 400 |
| M₂O/SiO₂ | 0.001 to 0.1 |
| R₂O/SiO₂ | 0.04 to 0.5 |
| R¹/SiO₂ | 0.05 to 1 |
| H₂O/SiO₂ | 8 to 300 |
wherein R represents a tetraethylammonium salt, preferably a halide and/or the hydroxide, R¹ represents diethylenetriamine and M represents an alkali metal ion.

5. Process according to one of the previous claims, **characterized in that** the reaction mixture is kept at a temperature of from 100 to 180°C until crystals of beta zeolite have formed and the obtained zeolite crystals are separated off.

6. Process according to one of the previous claims, **characterized in that** the reaction mixture has the following composition, expressed as molar ratios:
| | |
|---|---|
| SiO₂/Al₂O₃ | 20 to 50 |
| M₂O/SiO₂ | 0.01 to 0.08 |
| R₂O/SiO₂ | 0.06 to 0.4 |
| R¹/SiO₂ | 0.1 to 0.5 |
| H₂O/SiO₂ | 10 to 50 |
wherein R, R¹ and M are as defined in claim 4.

7. Process according to one of the previous claims, **characterized in that** R¹ is used as salt of general empirical formula R¹X, R¹X₂, and/or R¹X₃, preferably as halide, particularly preferably as bromide.

8. Process according to one of the previous claims, **characterized in that** R is tetraethylammonium bromide and M is sodium.

9. Process according to one of the previous claims, **characterized in that** in addition to diethylenetriamine and tetraethylammonium cations, the template mixture used comprises diethylene glycol, or consists substantially or fully of these compounds.

10. Process according to one of the previous claims, **characterized in that** seed crystals of beta zeolite are added to the reaction mixture in order to promote the formation of further crystals of beta zeolite.

11. Process according to one of the previous claims, **characterized in that** M [is] fully or partly replaced by hydrogen and/or metals of groups IIA, IIIA, IVA, IB, IIB, IIIB, IVB, VIB, and/or VIII of the periodic table, in particular by Cu, Ag, Co, Fe, Ni or platinum metals, particularly preferably Pt, Pd, Rh or Ru.

12. Use of diethylenetriamine and optionally diethylene glycol as template or co-template in a process for producing beta zeolite.

13. Use according to claim 12 together with tetraethylammonium cations.

## Revendications

1. Procédé de préparation de la zéolithe bêta, l'agent structurant mis en oeuvre comprenant de la diéthylènetriamine.

2. Procédé selon la revendication 1, **caractérisé en ce que** l'agent structurant mis en oeuvre comprend de la diéthylènetriamine et des cations de tétraéthylammonium.

3. Procédé selon l'une des revendications précédentes, **caractérisé en ce que** le mélange d'agents structurants mis en oeuvre est essentiellement ou exclusivement constitué de diéthylènetriamine et d'au moins un composé contenant des cations de tétraéthylammonium.

4. Procédé selon l'une des revendications précédentes, **caractérisé en ce que** l'on utilise un mélange réactionnel présentant une composition, exprimée en rapports molaires, comprise entre :
| | |
|---|---|
| SiO₂/Al₂O₃ | 10 à 400 |
| M₂O/SiO₂ | 0,001 à 0,1 |
| R₂O/SiO₂ | 0,04 à 0,5 |
| R'/SiO₂ | 0,05 à 1 |
| H₂O/SiO₂ | 8 à 300 |
R signifiant un sel de tétraéthylammonium, s'agissant de préférence d'un halogénure et/ou de l'hydroxyde, R' signifiant la diéthylènetriamine et M signifiant un ion d'un métal alcalin.

5. Procédé selon l'une des revendications précédentes, **caractérisé en ce que** l'on maintient le mélange réactionnel à une température comprise entre 100 et 180°C, jusqu'à qu'il se forme des cristaux de zéolithe, bêta et que l'on isole les cristaux de zéolithe ainsi obtenus.

6. Procédé selon l'une des revendications précédentes, **caractérisé en ce** ledit mélange réactionnel présente une composition, exprimée en rapports molaires, comprise entre :
| | |
|---|---|
| SiO₂/Al₂O₃ | 20 à 50 |
| M₂O/SiO₂ | 0,01 à 0,08 |
| R₂O/SiO₂ | 0,06 à 0,4 |
| R'/SiO₂ | 0,1 à 0,5 |
| H₂O/SiO₂ | 10 à 50 |
R, R' et M étant définis comme dans la revendication 4.

7. Procédé selon l'une des revendications précédentes, **caractérisé en ce que** l'on met en oeuvre R', sous forme d'un sel de la formule brute générale R'X, R'X₂, et/ou R'X₃, de préférence sous forme d'un halogénure, avec une préférence particulière sous forme d'un bromure.

8. Procédé selon l'une des revendications précédentes, **caractérisé en ce que** R est du bromure de tétraéthylammonium et M est du sodium.

9. Procédé selon l'une des revendications précédentes, **caractérisé en ce que** l'agent structurant mis en oeuvre comprend, outre la diéthylènetriamine et les cations de tétraéthylammonium, du diéthylèneglycol ou qu'il est essentiellement ou exclusivement constitué desdits composés.

10. Procédé selon l'une des revendications précédentes, **caractérisé en ce que** des germes de cristallisation en zéolithe bêta sont ajoutés au mélange réactionnel afin de favoriser la formation d'autres cristaux de zéolithe bêta.

11. Procédé selon l'une des revendications précédentes, **caractérisé en ce que** les M sont complètement ou partiellement remplacés par l'hydrogène et/ou des métaux des groupes 2, 13, 14, 11, 12, 3, 4, 6 et/ou 8 à 10 du tableau périodique, notamment par Cu, Ag, Fe, Ni ou les platinoïdes, avec une préférence particulière par Pt, Pd, Rh ou Ru.

12. Utilisation de diéthylènetriamine et, le cas échéant, de diéthylèneglycolen en tant qu'agent structurant ou, respectivement, agent structurant auxiliaire dans un procédé de fabrication de zéolithe bêta.

13. Utilisation selon la revendication 12, en outre avec des cations de tétraéthylammonium.
